# EUROPÄISCHE PATENTSCHRIFT

(11) **EP 1 262 051 B1**
(45) Veröffentlichungstag und Bekanntmachung des Hinweises auf die Patenterteilung: **04.02.2004**
(21) Anmeldenummer: 01915305.5
(22) Anmeldetag: 28.02.2001
(51) Int. Cl.: H04L 29/06

(54) **VERFAHREN ZUR STEUERUNG DER KOMMUNIKATION VON EINZELRECHNERN IN EINEM RECHNERVERBUND**
METHOD FOR CONTROLLING THE COMMUNICATION OF INDIVIDUAL COMPUTERS IN A MULTICOMPUTER SYSTEM
PROCEDE POUR COMMANDER LA COMMUNICATION ENTRE DES ORDINATEURS INDIVIDUELS FAISANT PARTIE D'UN RESEAU INFORMATIQUE

(30) Priorität: 29.02.2000 DE 10009570
(43) Veröffentlichungstag der Anmeldung: 04.12.2002
(73) Patentinhaber: Partec AG, 76133 Karlsruhe (DE)
(72) Erfinder: WARSCHKO, Thomas, 82211 Herrsching (DE); BLUM, Joachim, 71120 Grafenau (DE)
(74) Vertreter: Tomlinson, Edward James
(86) Internationale Anmeldenummer: PCT/EP2001/002257
(87) Internationale Veröffentlichungsnummer: WO 2001/065799

(56) Entgegenhaltungen:
- WO-A-99/35579
- WO-A-99/35793
- "ENTRY-LEVEL SAN INTERCONNECT FOR WINDOWSNT CLUSTERS" RESEARCH DISCLOSURE,KENNETH MASON PUBLICATIONS, HAMPSHIRE,GB, Nr. 425, September 1999 (1999-09), Seiten 1258-1259, XP000889231 ISSN: 0374-4353
- GARCIA D ET AL: "SERVERNET II" PARALLEL COMPUTER ROUTING AND COMMUNICATION. INTERNATIONAL WORKSHOP. PROCEEDINGS,XX,XX, 1997, Seiten 119-135, XP000964583
- DUNNING D ET AL: "THE VIRTUAL INTERFACE ARCHITECTURE" IEEE MICRO,US,IEEE INC. NEW YORK, Bd. 18, Nr. 2, 1. März 1998 (1998-03-01), Seiten 66-76, XP000751588 ISSN: 0272-1732
- MINDT J: "SAN: SPEICHERKONZEPT FUER HOHE BITRATEN" NACHRICHTENTECHNIK ELEKTRONIK,DE,VEB VERLAG TECHNIK. BERLIN, Bd. 48, Nr. 1, 1998, Seite 28 XP000740432 ISSN: 0323-4657

## Beschreibung

Die Erfindung betrifft ein Verfahren zur Steuerung der Kommunikation von Einzelrechnern in einem Rechnerverbund, mit dem es ermöglicht werden soll, den Verband aus Einzelrechnern als effizienten Parallelrechner zu benutzen.

Einzelrechner oder sogenannte Arbeitsplatzrechner, bei denen es sich um einen handelsüblichen Personalcomputer (PC) oder um eine Workstation handeln kann, sind in den letzten Jahren hinsichtlich ihrer Rechengeschwindigkeit und somit ihrer Rechenleistung stark verbessert worden, so daß sich mit ihnen eine Vielzahl von Programmabläufen sowohl im privaten als auch im gewerblichen Bereich ausführen läßt. Insbesondere im gewerblichen Bereich beispielsweise bei der Organisation von mittleren oder größeren Betrieben, bei der Simulation von Anwendungen und Fertigungsabläufen aber auch im Bereich der Forschung und Wissenschaft sind die Rechenleistungen der zur Zeit leistungsstärksten PCs jedoch nicht ausreichend, um die anstehenden Datenmengen in einer betriebswirtschaftlich akzeptablen Zeit zu verarbeiten. Für derartig rechenintensive Aufgaben muß deshalb üblicherweise auf sogenannte Großrechenanlagen zurückgegriffen werden, die jedoch sehr kostenintensiv sind.

Seit langer Zeit ist versucht worden, durch Aufbau eines Rechnerverbundes aus mehreren parallel geschalteten Einzelrechnern, die jeweils von einem handelsüblichen PC gebildet sind, eine kostengünstigere Alternative zu den Großrechenanlagen zu schaffen. Die Einzelrechner weisen dabei üblicherweise Standardprozessoren auf, die gegenüber Spezialprozessoren das bessere Preis-Leistungs-Verhältnis und kürzere Weiterentwicklungszeiten besitzen. Der Aufbau bzw. die Architektur eines derartigen Rechnerverbundes, der auch als Parallelrechner bezeichnet wird, beschränkt sich somit auf die Erweiterung der Uni-Prozessor-Architektur um eine Kommunikationsschnittstelle, die die Kommunikation zwischen den einzelnen Prozessoren realisiert, sowie die Replikation der erweiterten Uni - Prozessor- Architektur.

Zum Aufbau eines bekannten Rechner-Verbundes werden eine Anzahl von Arbeitsplatzrechnern, sogenannte (Rechen-) Knoten, ein spezielles Hochleistungsnetzwerk SAN (System Area Network), das zusätzlich zu einem Standardnetzwerk LAN (Local Area Network) betrieben wird, sowie ein Betriebssystem für die Rechenknoten verwendet. Als Arbeitsplatzrechner bzw. Rechenknoten in einem bekannten Rechner-Verbund kommen derzeit Systeme mit handelsüblichen Prozessoren zum Einsatz. Neben Ein - Prozessor - Systemen (Uni Prozessoren) können auch kleine SMP (Symmetrischer Multi- Prozessor)-Systeme (Dualprozessoren) als Knotenrechner verwendet werden. Der Ausbau der Knotenrechner (Hauptspeicher, Festplatten, Prozessor etc.) hängt weitgehend von den Anforderungen des Benutzers ab.

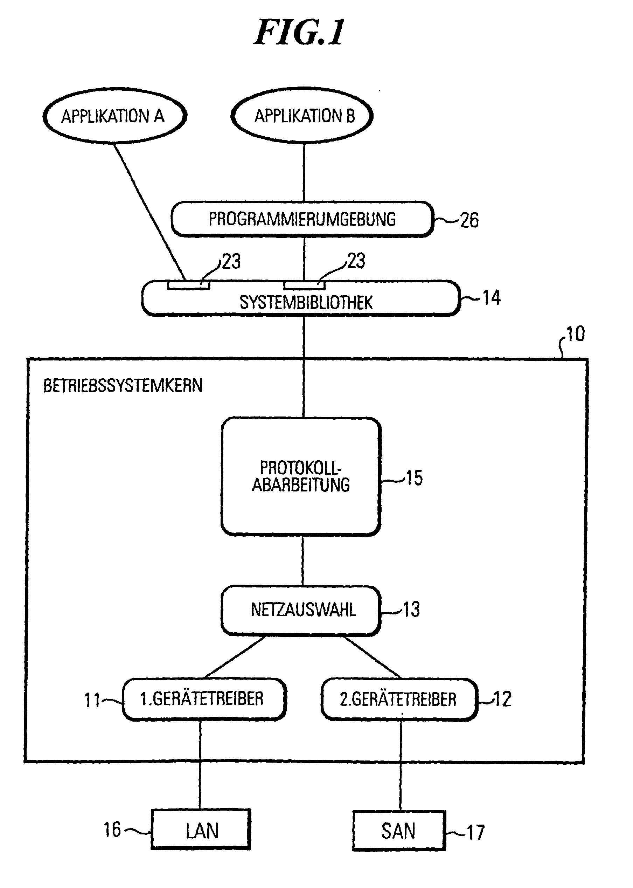

Die herkömmliche Vorgehensweise zur Integration eines Netzwerks innerhalb des Betriebssystems eines Einzelrechners ist in Figur 1 dargestellt. Hauptbestandteil in einem Betriebssystemkern 10 ist ein erster netzwerkspezifischer Gerätetreiber 11 für das Standardnetzwerk LAN und ein zweiter netzwerkspezifischer Gerätetreiber 12 für das Hochleistungsnetzwerk SAN. Die beiden parallel angeordneten Gerätetreiber 11 und 12 werden in Abhängigkeit von einer vorgeschalteten Netzauswahleinheit 13 angesprochen und passen jeweils die netzwerkspezifische Kommunikationsschnittstelle an die von den Netzwerkprotokollen erwartete Schnittstelle an. Dem Benutzer bleibt die spezifische Ansteuerung des Netzwerks sowie dessen Integration weitgehend verborgen. Er verwendet weiterhin die von einer Systembibliothek 14 bereitgestellten Kommunikationsoperationen und erst nach der Abarbeitung der Kommunikationsprotokolle in einer Protokolleinheit 15 innerhalb des Betriebssystemkems 10 findet der eigentliche Übergang auf die verschiedenen Kommunikationsnetzwerke statt. Der herkömmliche Kommunikationspfad erfolgt somit ausgehend von einer Applikation A oder B gegebenenfalls unter Verwendung einer Programmierumgebung 26 über die Kommunikationsschnittstelle 23 der Systembibliothek 14, den Eintritt ins Betriebssystem 10, die Abarbeitung der Kommunikationsprotokolle in der Protokolleinheit 15, die Netzwerkauswahl in der Netzauswahleinheit 13, die Ansteuerung über den jeweiligen Gerätetreiber 11 bzw. 12 bis zum Zugriff auf die zu dem gewählten Netzwerk zugehörige Hardware in Form einer Netzwerkkarte 16 bzw. 17.

Bei entsprechendem Gleichgewicht zwischen Kommunikations- und Rechenleistung kommt Großrechenanlagen eine wesentliche Bedeutung zu, wie deren steigende Verbreitung zeigt. Der Erfolg von Rechnerbündeln - als kostengünstige Alternative zu Großrechenanlagen - dagegen ist bisher eher moderat und auf spezielle Anwendungsklassen mit niedrigem Kommunikationsaufwand beschränkt. Eine Ursache hierfür liegt in der geringen bis mäßigen Datentransferleistung verfügbarer Kommunikationsnetzwerke aus dem LAN Bereich, die jedoch mit dem Aufkommen neuartiger Hochleistungsnetze aus dem SAN Bereich beseitigt wurde. Beim Einsatz dieser Hochleistungsnetzwerke stellt sich jedoch sehr schnell heraus, daß der herkömmliche, im Betriebssystem verankerte Kommunikationspfad - wie oben beschrieben - nicht in der Lage ist, das Leistungspotential der Hochleistungsnetze auch nur annähernd auszuschöpfen. Die Ursache dafür liegt sowohl in der Architektur des Kommunikationspfades selbst als auch in der Verwendung standardisierter Kommunikationsprotokolle (z.B. TCP/IP), die sämtlich nicht für die Bedürfnisse der Parallelverarbeitung, sondern für einen Betrieb in Weitverkehrsnetzen ausgelegt wurden.

Der eingeschränkte Funktionsumfang der im Weitverkehrsbereich eingesetzten Netzwerke zieht Mechanismen zur Wegfindung, Flußkontrolle, Fragmentierung bzw. Defragmentierung, Reihenfolgeerhaltung, Zwischenspeicherung, Fehlererkennung und Fehlerbehandlung nach sich, die alle im Funktionsumfang von standardisierten Kommunikationsprotokollen (z.B. TCP/IP) enthalten sind. Darüber hinaus stellen standardisierte Kommunikationsprotokolle oft Funktionalitäten bereit, die eher hinderlich beim Einsatz in parallelen Systemen sind. Darunter fallen insbesondere feste Paketgrößen, aufwendige Prüfsummenberechnungen, mehrere Protokollebenen und eine Vielzahl an Informationen in den Paketköpfen. Die unumgängliche Bereitstellung dieser Information kostet Zeit, die aus Sicht eines Programmentwicklers zur unerwünschten Verzögerungszeit zählt. Erschwerend kommt hinzu, daß der in Fig. 1 dargestellte Kommunikationspfad nicht in der Lage ist, sich der Funktionalität der unter- liegenden Netzwerke anzupassen und immer von einem bereitgestellten Minimalumfang ausgeht. Dies führt gerade beim Einsatz spezieller Hochleistungsnetzwerke zur Implementierung bereits vorhandener Funktionalität innerhalb der Protokollsoftware, die deren Abarbeitung erheblich verzögert, und die darauf aufsetzende Applikation maßgeblich behindert.

Zur Lösung dieser Problematik ist es bekannt, Verfahren zur Latenzzeitreduktion einzusetzen, die darauf abzielen, Ineffizienzen auf dem Kommunikationspfad soweit wie möglich zu eliminieren. Die Ansatzpunkte liegen dabei nicht nur bei den eingesetzten Kommunikationsnetzwerken, sondern vor allem bei den eingesetzten Netzwerkprotokollen, der Interaktion mit dem Betriebssystem sowie der Definition und der Mächtigkeit der auf Anwendungsebene zur Verfügung gestellten Kommunikationsschnittstelle. Die Reduktion der Kommunikationslatenzzeiten basiert auf der gezielten Verlagerung von Aufgaben aus höheren Ebenen in tieferliegende Ebenen des Kommunikationspfades bzw. der Kommunikationshardware, was zu einer Restrukturierung des Kommunikationspfades in seiner Gesamtheit führt, wie dies z.B. in "Entry-Level SAN Interconnect for WindowsNT (R) Clusters", Research Disclosure, Kenneth Mason Publications, Nr. 425, September 1999, Seiten 1258-1259 beschrieben ist.

Der Erfindung liegt die Aufgabe zugrunde, ein Verfahren zur Steuerung der Kommunikation von Einzelrechnern in einen Rechnerverbund zu schaffen, bei dem die Kommunikationslatenzzeiten wesentlich reduziert sind und der Datendurchsatz erhöht ist, wobei die Sicherheit der Kommunikationsschnittstelle nicht eingeschränkt wird und die Transparenz der Kommunikationsschnittstelle gegenüber den Anwendungsapplikationen gewährleistet wird.

Diese Aufgabe wird erfindungsgemäß mit einem Verfahren gemäß Anspruch 1 gelöst. Dabei wird von der Grundidee ausgegangen, den herkömmlichen Kommunikationspfad nur für das Standardnetzwerk LAN vorzusehen und parallel dazu einen zweiten Kommunikationspfad für das Hochleistungsnetzwerk SAN zu schaffen, der einen direkten Zugriff einer. Applikation auf die SAN-Kommunikationshardware unter zumindest weitgehender Umgehung des Betriebssystems erlaubt, so daß die Kommunikationshardware aus dem Adreßraum des Benutzers heraus angesteuert werden kann. Dieses Vorgehen eröffnet die Möglichkeit, sowohl das Betriebssystem als auch die herkömmlichen Kommunikationsprotokolle vollständig aus dem effizienzkritischen Pfad der Kommunikationsoperationen zu entfernen. Die Applikationen auf Benutzerseite sind auf zumindest eine Bibliothek aufgesetzt, in der oder unmittelbar nach der eine Netzauswahleinheit eines der beiden Netzwerke auswählt. Dabei findet die Netzauswahl vor der Abarbeitung des Protokolls statt, die innerhalb des Betriebssystems erfolgt. Durch diese Verlagerung der Auswahl des Netzwerkes, die bei einer herkömmlichen Architektur des Kommunikationspfades erst zwischen der Abarbeitung des Protokolls und den Gerätetrebern stattfindet, ist es möglich, die Kommunikationsverbindungen frühzeitig, d.h. unmittelbar nach Eintritt in den Betriebssystemkern und vor allem vor Abarbeitung der Kommunikationsprotokolle auf den schnelleren zusätzlichen Kommunikationspfad umzuleiten. Diese Umleitung findet jedoch nur statt, wenn die gewünschte Kommunikationsverbindung auch über das Hoch-leistungsnetzwerk und somit den zusätzlichen Kommunikationspfad abgewickelt werden kann. Falls dies nicht der Fall sein sollte, wird der herkömmliche Kommunikationspfad durch das Betriebssystem benutzt. Es hat sich gezeigt, daß auf diese Weise eine effiziente

Parallelverarbeitung in einem Verbund aus gekoppelten Arbeitsplatzrechnern mit hoher Leistungsfähigkeit und Flexibilität erreicht werden kann.

Weitere Einzelheiten und Merkmale der Erfindung sind aus der folgenden Beschreibung unter Bezugnahme auf die Zeichnung ersichtlich. Es zeigen:
- Figur 1: eine schematische Darstellung einer herkömmlichen Kommunikationsarchitektur,
- Figur 2: eine schematische Darstellung einer erfindungsgemäßen Kommunikationsarchitektur nach einem ersten Ausführungsbeispiel,
- Figur 3: eine schematische Gegenüberstellung der Kommunikationsarchitekturen gemäß den Figuren 1 und 2 mit Verdeutlichung der verfahrensmäßigen Änderungen,
- Figur 4: eine schematische Darstellung einer erfindungsgemäßen Kommunikationsarchitektur nach einem zweiten Ausführungsbeispiel,
- Figur 5: eine schematische Gegenüberstellung der Kommunikationsarchitekturen gemäß den Figuren 1 und 4 mit Verdeutlichung der verfahrensmäßigen Änderungen,
- Figur 6: eine schematische Darstellung einer erfindungsgemäßen Kommunikationsarchitektur nach einem dritten Ausführungsbeispiel und

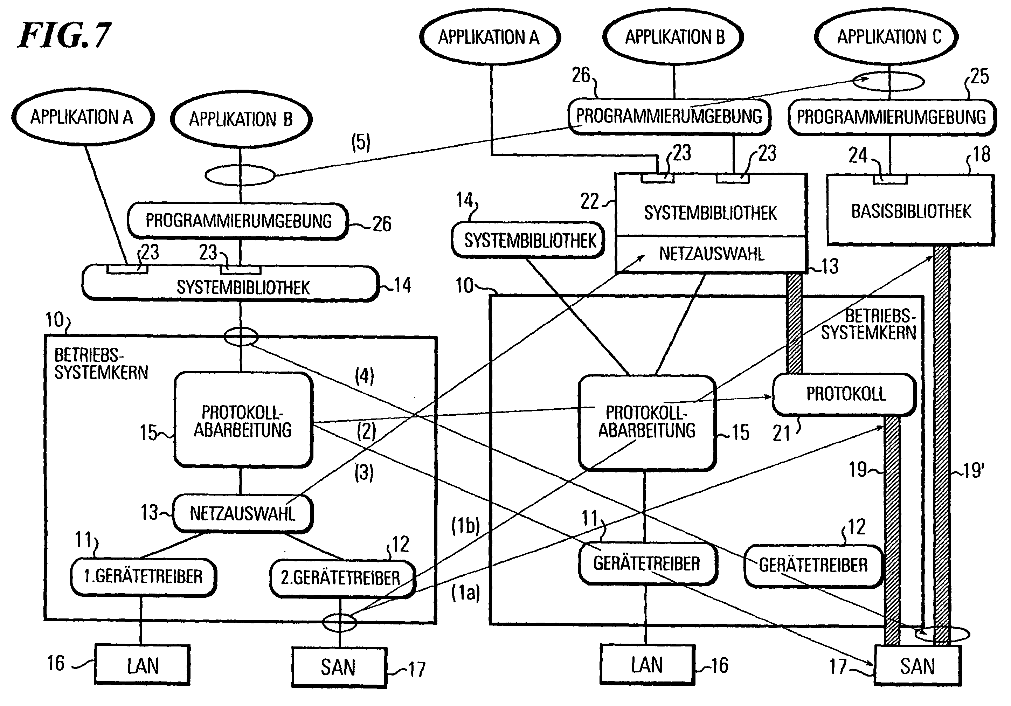

- Figur 7: eine schematische Gegenüberstellung der Kommunikationsarchitekturen gemäß den Figuren 1 und 6 mit Verdeutlichung der verfahrensmäßigen Änderungen

Zunächst sei im folgenden auf die Basiskomponenten eines Rechnerverbundes eingegangen, bei dem das erfindungsgemäße Verfahren zur Anwendung kommt. Als Einzelplatz- bzw.

Knotenrechner finden herkömmliche PCs Verwendung, wie sie bereits oben beschrieben wurden. Neben dem Standardnetzzwerk LAN wird das Hochleistungsnetzwerk SAN betrieben, das eine möglichst hohe Übertragungskapazität von beispielsweise 1,28 Gbit/s, eine mehrdimensionale, frei wählbare, skalierbare Netzwerktopologie sowie eine freie Programmierbarkeit des Netzwerkadapters aufweisen sollte. Ein derartiges Hochleistungsnetzwerk ist an sich bekannt.

Als Betriebssystem der Knotenrechner innerhalb des Rechnerverbundes kommt Unix bzw. ein Derivat zum Einsatz. Darüber hinaus ist eine Systemsoftware notwendig, um aus den handelsüblichen Einzelkomponenten den Rechnerverbund zu bilden. Die Systemsoftware umfaßt im wesentlichen folgende Komponenten:
- ein Programm zur Steuerung des Netzwerkadapters,
- einen Gerätetreiber zur Integration des Netzwerkadapters in das Betriebssystem,
- eine Basisbibliothek zur Steuerung und Abwicklung der Kommunikationsverbindungen,
- Anwenderbibliotheken für standardisierte Programmierschnittstellen und -umgebungen,
- ein Programm zum Aufbau, zur Verwaltung und zur Steuerung des Rechnerverbundes sowie
- Dienstprogramme zur Konfiguration und Administration des Rechnerverbundes.

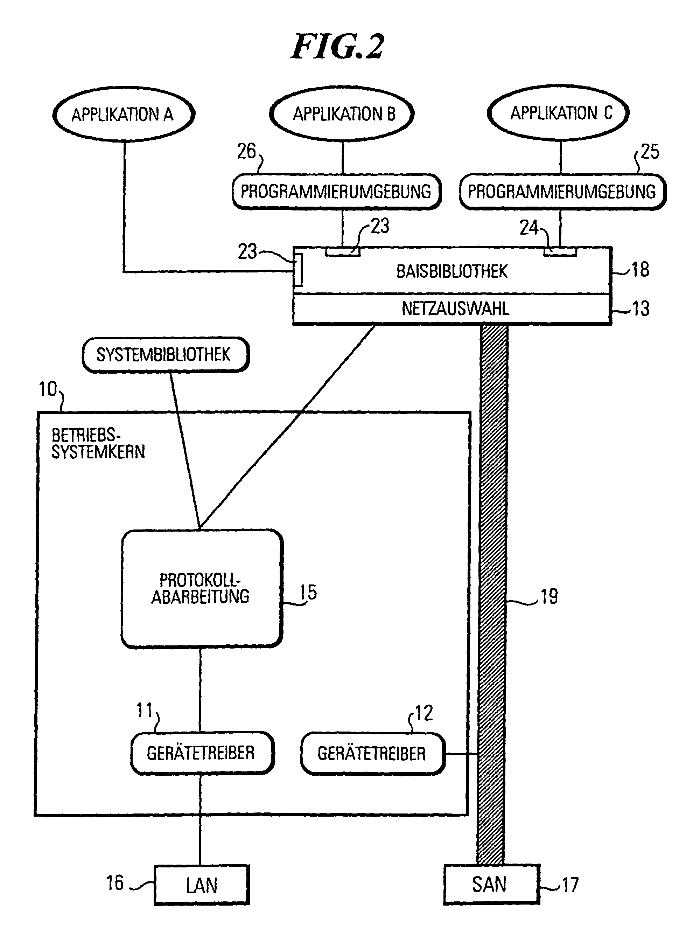

Figur 2 zeigt die schematische Darstellung einer erfindungsgemäßen Kommunikationsarchitektur, wobei bereits im Zusammenhang mit Figur 1 erläuterte Funktionen mit den gleichen Bezugszeichen versehen sind. Wie Figur 2 zeigt, greifen drei beispielhaft dargestellte Applikationen A, B und C gegebenenfalls unter Zwischenschaltung einer Programmierumgebung 25 bzw. 26 über Kommunikationsschnittstellen 23 bzw. 24 auf eine Basisbibliothek 18 zu, in die eine Netzauswahleinheit 13 integriert ist. Die Netzauswahleinheit 13 kann entweder die Protokolleinheit 15 innerhalb des Betriebssystemkerns 10 ansprechen, der der erste Gerätetreiber 13 für die Hardware bzw. Netzwerkkarte 16 des Standardnetzwerks LAN nachgeschaltet ist. Der Protokolleinheit 15 ist desweiteren die bekannte Systembibliothek 14 zugeordnet.

Alternativ kann die Netzauswahleinheit 13 auch einen zweiten Kommunikationspfad 19 ansprechen, der die Basisbibliothek 18 direkt unter Umgehung des Betriebssystemkerns 10 mit der Hardware bzw. der Netzwerkkarte 17 des Hochleistungsnetzes SAN verbindet. Dem zweiten Kommunikationspfad 19 ist ebenfalls ein Gerätetreiber 12 zugeordnet, der jedoch nur Verwaltungsaufgaben wahrnimmt und nicht mehr in die eigentliche Kommunikation eingebunden ist. Aufgrund der Netzauswahl in oder unmittelbar nach der Basisbibliothek 18, d.h. vor Eintritt in den Betriebssystemkern 10, können Kommunikationsverbindungen bereits in einem frühen Stadium auf den schnelleren zweiten Kommunikationspfad 19 umgeleitet und so unter Umgehung des Betriebssystemkerns 10 direkt dem Hochleistungsnetzwerk SAN zugeführt werden. Wenn eine Kommunikationsverbindung über den zweiten Kommunikationspfad 19 nicht möglich ist, weil beispielsweise die SAN-Umgebung temporär nicht verfügbar ist oder das Ziel nur über die LAN-Umgebung erreichbar ist, wird auf den ersten Kommunikationspfad, d.h. die Betriebssystemkommunikation und das Standardnetzwerk LAN zurückgegriffen.

Das verwendete Hochleistungsnetzwerk SAN sollte für die Anforderungen der Parallelverarbeitung optimiert werden. Dabei werden Funktionalitäten, die üblicherweise auf Softwareebene realisiert werden, in die Verantwortlichkeit der Netzwerkhardware übertragen. Dazu zählen insbesondere
a) die Skalierbarkeit des Netzwerkes, die einen Leistungseinbruch bei wachsender Anzahl angeschlossener Knotenrechner verhindert,
b) die Wegfindung innerhalb des Netzwerkes, wodurch die Protokolle auf höherer Ebene stark vereinfacht werden,
c) die verlustfreie Datenübertragung und die Reihenfolgeerhaltung von aufeinanderfolgenden Paketen, wodurch Flußkontrollmechanismen auf höherer Ebene stark vereinfacht werden,
d) variable Paketgrößen, die eine Bandbreitenverschwendung vermeiden, sowie
e) minimale Kommunikationsprotokolle, die mit sehr wenig Informationen auskommen und den Aufwand zur Erstellung der Pakete reduzieren.

Zur Ausbildung schlanker Kommunikationsprotokolle werden alle Protokollaufgaben, die direkt in die Netzwerkhardware verlagert werden können, dorthin verlagert. Dabei handelt es sich beispielsweise um die gesicherte Datenübertragung mittels Flußkontrolle sowie die Reihenfolgetreue von Paketströmen. Desweiteren wird die zur Verfügung stehende Kontextinformation genutzt, um Kommunikationsprotokolle so schlank wie möglich zu gestalten. Insbesondere die Tatsache, daß es sich bei einem Verbund paralleler Rechner um ein geschlossenes Netzwerk mit bekannter Anzahl von Knoten und bekannter Topologie handelt, vereinfacht beispielsweise die Wegfindungs- und Wegwahlproblematik, da alle möglichen Wege statisch vorberechnet werden können, sowie die Identifikation von Knoten, da alle Knoten von vornherein bekannt sind und mit einer eindeutigen Kennung versehen werden können. Außerdem unterliegt das verwendete Protokoll keinerlei Kompatibilitätsbeschränkung aufgrund von Kommunikationsbeziehungen mit fremden Systemen, da fremde Systeme innerhalb des Verbundes parallel gestalteter Rechner nicht existieren. Insgesamt führt die konsequente Ausnutzung des vorhandenen Systemwissens dazu, daß die sonst im Betriebssystemkern verankerten Protokolle für den zweiten Kommunikationspfad 19 vollständig eliminiert werden können.

Die für die Funktionsfähigkeit des Rechnerverbundes notwendige Multiprozeßfähigkeit, d.h. die Möglichkeit, daß mehrere Prozesse gleichzeitig Kommunikationsverbindungen unterhalten können, wird bei der erfindungsgemäßen Systemarchitektur durch entsprechende Mechanismen innerhalb der Basisbibliothek erreicht.

Aus Sicht des Benutzers ist das Vorhandensein standardisierter Kommunikationsschnittstellen von erheblicher Bedeutung, da diese es ihm erlauben, eine Vielzahl von Applikationen ohne größeren Aufwand auf das jeweilige Zielsystem zu portieren. Desweiteren gewährleisten standardisierte Kommunikationsschnittstellen, daß Applikationen beim Wechsel auf eine neue Rechnergeneration nicht wiederum speziell angepaßt werden müssen. Aus diesem Grunde wird erfindungsgemäß dem Benutzer eine der Schnittstellen des ersten Kommunikationspfades bzw. der Betriebssystemkommunikation syntaktisch und semantisch äquivalente Programmierschnittstelle 23 zur Verfügung gestellt. Darauf aufbauend kann eine Applikation A oder B gegebenenfalls unter Verwendung einer standardisierten Programmierumgebung 26 die Kommunikation über die Basisbibliothek 18 abwickeln. Darüber hinaus werden speziell angepaßte Versionen von standardisierten (MPI = Message Passing Interface) oder weit verbreiteten Programmierumgebungen 25 (PVM = Parallel Virtual Machine) angeboten, die über eine spezielle Schnittstelle 24 mit der Basisbibliothek 18 interagieren. Die Programmierschnittstelle 23 eignet sich vorrangig für Applikationen aus der verteilten Datenverarbeitung in lokalen Netzen und deren Portierung auf das erfindungsgemäße System. Die Programmierumgebungen 25 bzw. 26 PVM und MPI stellen dagegen das Bindeglied zu kommerziellen Parallelrechnern und den dort laufenden Applikationen dar.

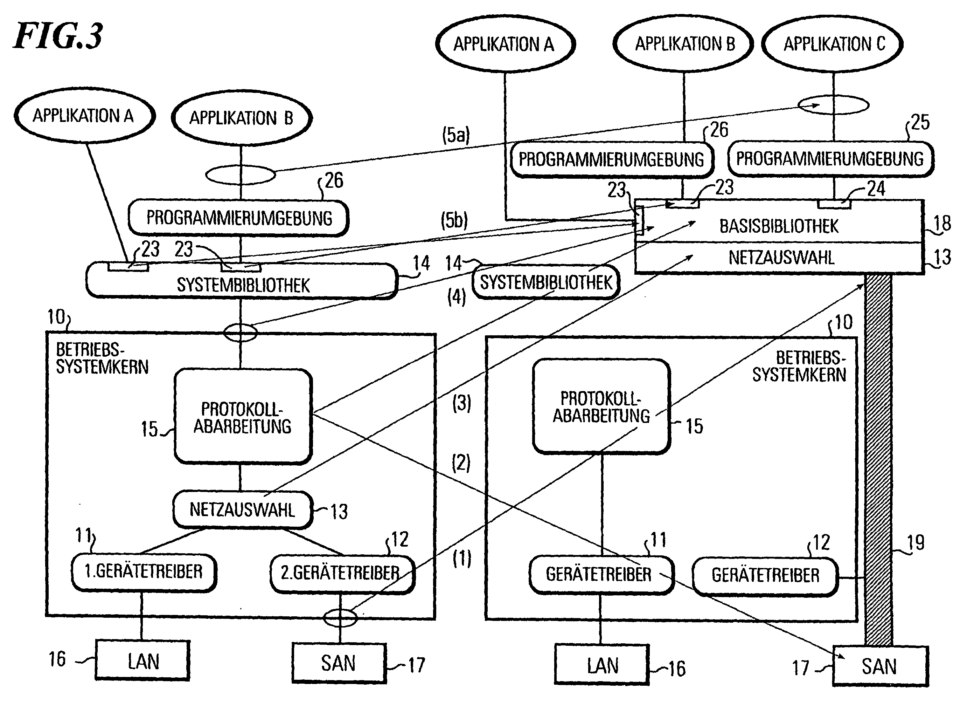

In Figur 3 ist auf der linken Seite die herkömmliche Kommunikationsarchitektur, wie sie bereits anhand der Fig. 1 beschrieben wurde, der auf der rechten Seite dargestellten erfmdungsgemäßen Kommunikationsarchitektur, wie sie anhand der Figur 2 beschrieben wurde, direkt gegenübergestellt, wobei durch zwischen den beiden Darstellungen verlaufende Pfeile die Verlagerung von einzelnen Kommunikations- Verfahrensschritten angedeutet ist.

Pfeil (1) in Figur 3 beschreibt die Verlagerung des Zugangs zu dem SAN-Netzwerk aus den unteren Schichten des Betriebssystems direkt in die Basisbibliothek 18. Auf diese Weise ist die Kommunikationsarchitektur von sämtlichen Beschränkungen befreit, die üblicherweise innerhalb eines Betriebssystems vorhanden sind. Dabei wird die Fähigkeit des im System vorhandenen Speicherverwaltungsbausteins ausgenutzt, aus physikalischen Speicherbereichen nach Belieben logische Adreßräume zu konstruieren. Dieses sogenannte Basisprinzip wird angewendet auf die Kommunikationshardware und kann als User-Level-Kommunikation bezeichnet werden.

Wie in Figur 3 durch die Pfeile (2) angedeutet ist, wird die in den bisher im Betriebssystemkern 10 angesiedelten Protokollen erbrachte Funktionalität, insbesondere die gesicherte Datenübertragung mittels Flußkontrolle sowie die Reihenfolgetreue von Paketströmen, entweder direkt in die SAN-Netzwerkhardware 17 oder in die Basisbibliothek verlagert, so daß die bisher im Betriebssystemkern 10 angesiedelten Protokolle für den zweiten Kommunikationspfad 19 vollständig eliminiert werden können. Wenn für die Netzwerkhardware 17 ein programmierbarer Netzwerkadapter vorliegt, ist es möglich, die gewünschte Funktionalität ausschließlich vom Netzwerk erbringen zu lassen.

Erfindungsgemäß wird die Auswahl des Netzwerks, die normalerweise im Betriebssystemkern zwischen der Protokollabarbeitung und dem Gerätetreiber angesiedelt ist, aus dem Betriebssystem heraus in die Basisbibliothek 18 verlagert (siehe Pfeil (3)). Somit ist es möglich, Kommunikationsverbindungen vor Durchlaufen des Betriebssystemkerns auf den schnelleren zweiten Kommunikationspfad 19 umzuleiten.

Die Abbildung der Betriebssystemfunktionalität aus dem Betriebssystem in die Basisbibliothek gemäß Pfeil (4) realisiert die Multi-Prozessfähigkeit der Basisbibliothek. Die dazu notwendigen Verfahren zum Schutz kritischer Programmabschnitte und Datenbereiche mittels Semaphoren sind aus dem Betriebssystembau an sich bekannt.

Auch die Programmierschnittstelle 23 einer Applikation wird von der Systembibliothek in der Basisbibliothek abgebildet (siehe Pfeil (5b)) und stellt darüber hinaus äquivalente Programmierumgebungen 25 zur Verfügung (siehe Pfeil (5a)), die ihrerseits über die Schnittstelle 24 direkt auf die Basisbibliothek 18 zurückgreifen. Beide Maßnahmen dienen dazu, Applikationen einfacher, besser und schneller auf die erfindungsgemäße Kommunikationsarchitektur portieren zu können.

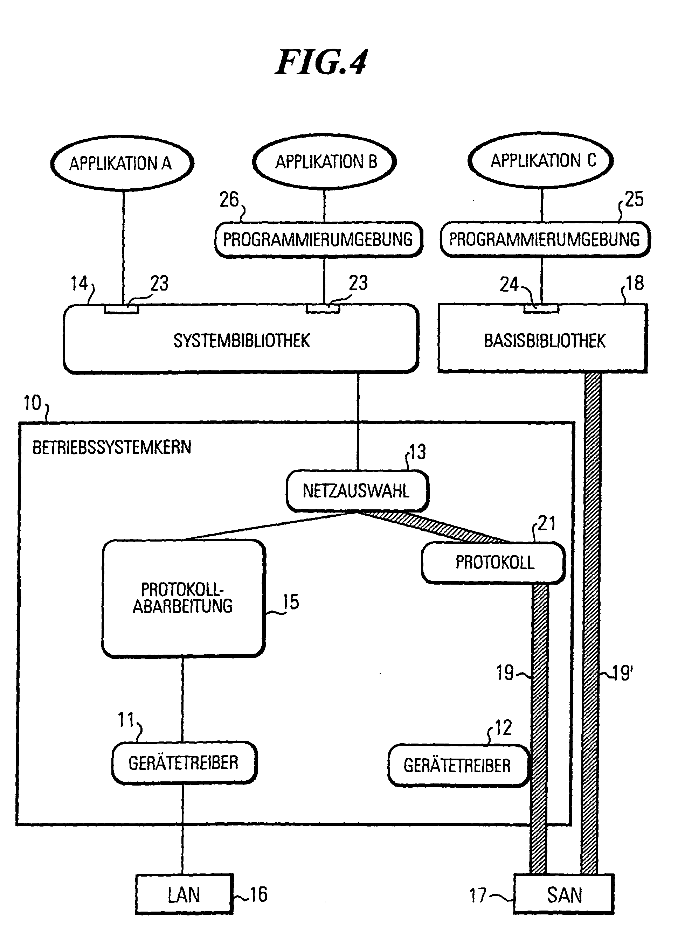

Die bisher dargestellte Kommunikationsarchitektur bietet gegenüber einer herkömmlichen Kommunikationsarchitektur in Betriebssystemen erhebliche Leistungsvorteile, bringt jedoch aber auch eher nachteilige Nebeneffekte mit sich. Zum einen wird die Leistung durch eine Einschränkung bezüglich der Sicherheit der Kommunikationsschnittstelle erkauft und zum anderen müssen Standardapplikationen, die die Hochgeschwindigkeitskommunikation nutzen wollen, mit einer speziellen Systembibliothek gebunden werden. Um diese beiden Schwachstellen zu beheben, wird die in Fig. 4 dargestellte Kommunikationsarchitektur vorgeschlagen. Gegenüber Fig. 3 gewährleistet die erneute Verlagerung der Netzauswahl 13 aus der Bibliothek 18 in den Betriebssystemkern 10, jedoch vor dem eigentlichen Eintritt in die Protokollverarbeitung 15, sowohl die in Betriebssystemen übliche Sicherheit von Kommunikationsschnittstellen, als auch die gewünschte Transparenz der Kommunikationsschnittstelle gegenüber den Anwenderapplikationen, die nun ohne spezielle Anbindung an die Basisbibliothek 18 auskommen.

Figur 4 zeigt eine weiterentwickelte Ausgestaltung einer Kommunikationsarchitektur im Detail. Applikationen A und B greifen gegebenenfalls unter Zwischenschaltung einer Programmierumgebung 26 auf die Systembibliothek 14 zu, der der Betriebssystemkern 10 nachgeschaltet ist. Direkt nach Eintritt in das Betriebssystem 10 wird in einer Netzauswahleinheit 13 die Auswahl zwischen dem Standardnetzwerk LAN und dem Hochleistungsnetzwerk SAN getroffen. Bei Auswahl des Standardnetzwerkes LAN werden die Kommunikationsprotokolle in der Protokolleinheit 15 abgearbeitet, der der Gerätetreiber 11 für die LAN-Netzwerk-Hardware 16 nachgeschaltet ist. Bei Auswahl des Hochleistungsnetzwerkes SAN kann über einen Kommunikationspfad 19 direkt auf die SAN-Netzwerk-Hardware 17 zugegriffen werden. Auch hierbei sind in dem Kommunikationspfad 19 eine Protokollschicht 21 und ein Gerätetreiber 12 enthalten, der jedoch nur Verwaltungsaufgaben wahrnimmt und nicht in die eigentliche Kommunikation eingebunden ist.

Zusätzlich zu dem Kommunikationspfad 19, der die Systembibliothek 14 nach Netzauswahl unmittelbar nach Eintritt in den Betriebssystemkern 10 mit der SAN-Netzwerk-Hardware 17 verbindet, ist außerhalb des Betriebssystemkerns eine Basisbibliothek 18 vorgesehen, auf die eine Applikation C unter Zwischenschaltung einer geeigneten Programmierumgebung 25 zugreift und die über den außerhalb des Betriebssystemkerns 10 liegenden Kommunikationspfad 19' direkt auf die SAN-Netzwerk-Hardware 17 zugreift. Auf diese Weise sind sogenannte unprivilegierte Kommunikationsendpunkte zur Verfügung gestellt, die den Zugriff auf die SAN- Netzwerk-Hardware 17 unter Umgehung des Betriebssystems erlauben, aber im Gegensatz zur reinen User-Level-Kommunikation allen Schutzmechanismen des Betriebssystems unterliegen. Dabei ergibt sich eine sehr effiziente Ansteuerung der SAN-Netzwerk-Hardware 17, ohne jedoch die Schutzmechanismen des Betriebssystems zu umgehen. Kommunikationsendpunkte sind in sich abgeschlossene und vom Betriebssystem verwaltete und geschützte Einheiten, die jeweils exklusiv einer Applikation zugeordnet werden, so daß unterschiedliche Applikationen unterschiedliche Kommunikationsendpunkte verwenden und beispielsweise Applikation A nicht in der Lage ist, auf einen Endpunkt einer Applikation B zuzugreifen, obwohl beide Kommunikationsendpunkte über dieselbe Hardware abgewickelt werden.

Auch bei der in Figur 4 dargestellten Kommunikationsarchitektur sollten die oben im Zusammenhang mit Fig. 2 erläuterten Voraussetzungen an das Hochleistungsnetzwerk SAN und die schlanken Kommunikationsprotokolle verwirklicht sein. Darüber hinaus werden auch in diesem Fall standardisierte Programmierschnittstellen und standardisierte oder weit verbreitete Programmierumgebungen vorgesehen.

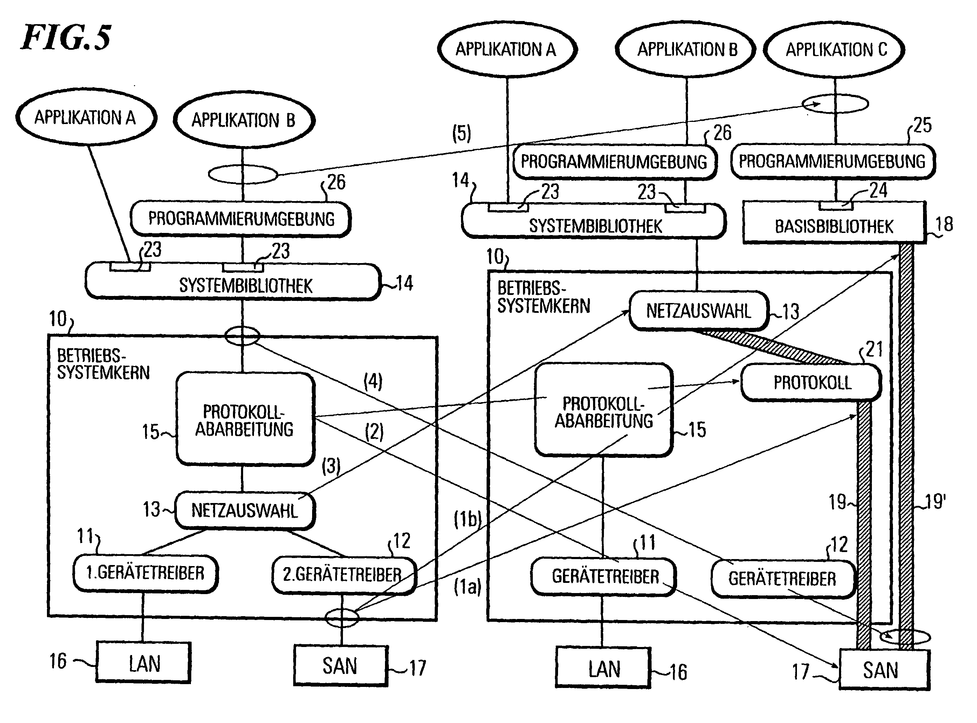

Aus Figur 5 ist die Verlagerung von Funktionalität und Zugangspunkten im Vergleich zwischen einer herkömmlichen Kommunikationsarchitektur, wie sie im Zusammenhang mit Figur 1 beschrieben wurde, und der neuen Kommunikationsarchitektur gemäß Figur 4 dargestellt, wobei auch hier zwischen den beiden Darstellungen verlaufende Pfeile die einzelnen Verlagerungen symbolisieren. Die durch die Pfeile (1a) und (1b) angedeutete Verlagerung des Zugangs zu dem SAN-Netzwerk aus den unteren Schichten des Betriebssystems in die innerhalb des Betriebssystemskerns liegende Protokollschicht 21 des Kommunikationspfades 19 und/oder direkt in den Adreßraum einer Applikation bzw. in die Basisbibliothek 18 als Teil der Applikation befreit das System von sämtlichen Beschränkungen, die üblicherweise innerhalb des Betriebssystems vorhanden sind. Dabei wird die Fähigkeit des Speicherverwaltungsbausteins ausgenutzt, aus physikalischen Speicherbereichen nach Belieben logische Adreßräume zu konstruieren. In Kombination mit zusätzlicher Funktionalität innerhalb des Netzwerkadapters ergeben sich daraus unprivilegierte Kommunikationsendpunkte.

Ein Großteil der in üblichen Protokollen erbrachten Funktionalität wird gemäß Pfeil (2) direkt in die SAN-Netzwerkhardware sowie in die Protokollschicht 21 des Kommunikationspfades 19 verlagert. Das in Zusammenhang mit Figur 2 zur Verlagerung der Protokollfunktionalität Gesagte gilt hier entsprechend.

Gemäß Pfeil (3) wird die Auswahl des Netzwerkes, die bei herkömmlicher Kommunikationsarchitektur zwischen der Protokollabarbeitung und dem Gerätetreiber erfolgt, vor die eigentliche Protokollabarbeitung und im dargestellten Beispiel unmittelbar hinter den Eintritt in den Betriebssystemkerns 10 verlagert, so daß Kommunikationsoperationen frühzeitig auf den schnelleren Kommunikationspfad 19 umgeleitet werden können. Auch hier findet diese Umleitung jedoch nur statt, wenn die gewünschte Kommunikationsverbindung über den Kommunikationspfad 19 abgewickelt werden kann. Ist dies nicht der Fall, so wird auf die herkömmliche Betriebssystemkommunikation zurückgegriffen. Die Verlagerung der Funktionalität aus dem Betriebssystem in die SAN-Netzwerk-Hardware gemäß Pfeil (4) realisiert die Multi-Prozeß-Fähigkeit der offierten Kommunikationsschnittstelle in Form der unabhängigen Kommunikationsendpunkte. Das dazu notwendige Verfahren zum Schutz von Speicherbereichen ist an sich bekannt und wird von der Hardwareseite vom Speicherverwaltungsbaustein des Rechners geleistet.

Wenn Applikationen A und B die reguläre Kommunikationsschnittstelle des Betriebssystems, d.h. die Systembibliothek verwenden, dann ist der Einsatz der Hochleistungskommunikation aufgrund der Plazierung der Netzwerkauswahl für diese Applikationen vollkommen transparent. Wenn jedoch gängige Parallelrechner-Programmierungsumgebungen (PVM oder MPI) eingesetzt werden, sind weitere Optimierungen innerhalb des Kommunikationspfades möglich. Diese werden unterstützt, indem äquivalente bzw. optimierte Programmierumgebungen angeboten und damit die Applikationsschnittstelle auf diese Programmierumgebungen verlagert werden, wie es durch den Pfeil (5) in Figur 5 angedeutet ist.

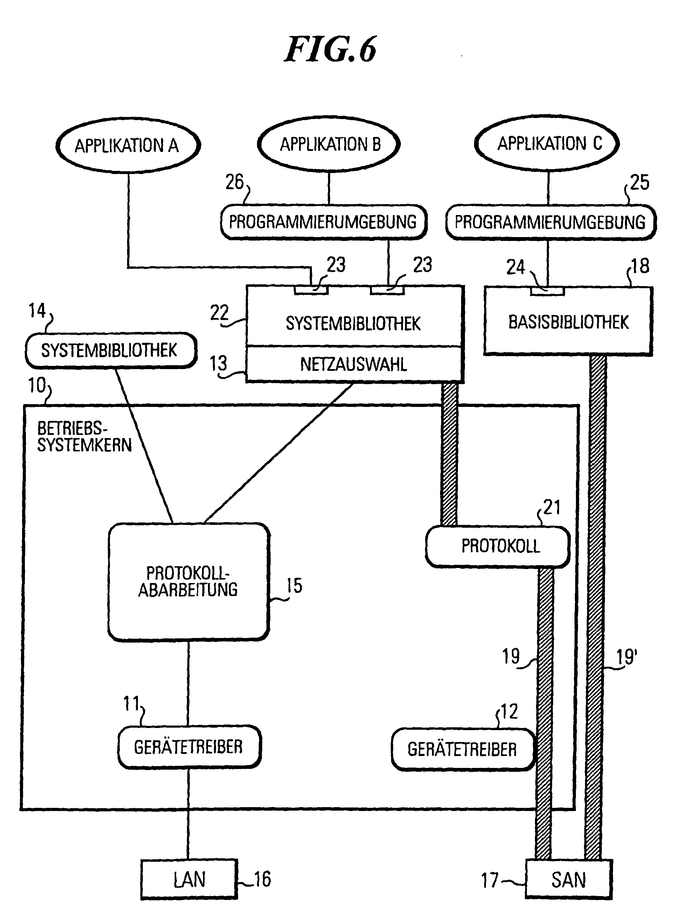

Bei der Kommunikationsarchitektur gemäß Figur 4 findet die Netzwerkauswahl direkt nach dem Eintritt in das Betriebssystem statt. Dazu sind üblicherweise Modifikationen des Betriebssystemkerns notwendig. Falls das Betriebssystem es nicht zuläßt, an dieser Stelle Modifikationen vorzunehmen, kann eine alternative Kommunikationsarchitektur verwendet werden, wie sie in Figur 6 dargestellt ist. Diese Architektur unterscheidet sich von der Architektur gemäß Figur 4 im wesentlichen dadurch, daß die Netzwerkauswahl 13 aus dem Betriebssystemkern in eine vorgeschaltete PS - System-Bibliothek 22 verlagert. Diese PS-Systembibliothek 22 vereint im wesentlichen die Funktionalität der herkömmlichen Systembibliothek und der Basisbibliothek und offeriert nach außen hin dem Benutzer dieselbe Schnittstelle wie die Systembibliothek. Verwendet eine Applikation die PS-Systembibliothek 22 anstelle der regulären Systembibliothek 14, die weiterhin vorhanden ist, dann werden alle internen Kommunikationsverbindungen - soweit wie möglich - über das SAN-Hochleistungsnetzwerk abgewickelt.

Zu den anhand der Figur 5 bereits erläuterten Verlagerungen von Funktionalität und Zugangspunkten ergeben sich folgende Änderungen. Die Auswahl des Netzwerks (Pfeil (3)) wird nunmehr in die PS-Systembibliothek 22 verlagert, die dabei alle Funktionen der eigentlichen Systembibliothek zur Verfügung stellt. Die Verlagerung der Netzwerkauswahl in die PS-Systembibliothek ermöglicht es, Kommunikationsverbindungen frühzeitig, d.h. vor Eintritt in den Betriebssystemkern und vor allem vor Abarbeitung der Standardprotokolle auf den schnelleren Kommunikationspfad 19 des SAN-Hochleistungsnetzwerkes umzuleiten. Auch hierbei findet diese Umleitung jedoch nur statt, wenn die gewünschte Kommunikationsverbindung auch über diesen Kommunikationspfad 19 abgewickelt werden kann. Anderenfalls wird auf die übliche Betriebssystemkommunikation zurückgegriffen.

Wie bereits im Zusammenhang mit Figur 5 erläutert, wird die Programmierschnittstelle einer Applikation von der Systembibliothek zur Basisbibliothek verlagert (Pfeil 5b) und es werden äquivalente Programmierumgebungen zur Verfügung gestellt (Pfeil (5a)), die ihrerseits dann direkt auf die Basisbibliothek zurückgreifen.

## Patentansprüche

1. Verfahren zur Steuerung der Kommunikation von Einzelrechnern in einem Rechnerverbund, wobei die Einzelrechner über ein Standardnetzwerk LAN und ein Hochleistungsnetzwerk SAN miteinander verbunden sind und wobei jeder Einzelrechner in einem Betriebssystemkern (10) eine mit dem Standardnetzwerk LAN verbundenen Protokolleinheit (15) zur Abarbeitung von Kommunikationsprotokollen und eine dem Betriebssystemkem (10) vorgeschaltete Bibliothek (14,18,22) aufweist, auf der an einer Kommunikationsschnittstelle (23,24) Applikationen (A,B) aufsetzen, wobei in einer Netzauswahleinheit (13) die Auswahl zwischen dem Standardnetzwerk LAN und dem Hochleistungsnetzwerk SAN erfolgt, **dadurch gekennzeichnet, daß** die Netzauswahl nach der Kommunikanonsschnittstelle (23,24). der Bibliothek und unmittelbar nach dem Eintritt in den Betriebssystemkern (10) erfolgt und die Bibliothek über einen Kammunikationspfad (19) mit dem Hochleistungsnetzwerk SAN verbunden ist und dass ein weiterer Kommunikationspfad (19') vorgesehen ist, der eine weitere Bibliothek direkt mit dem Hochleistungsnetzwerk SAN verbindet.

2. Verfahren nach Anspruch 1, **dadurch gekennzeichnet, daß** der weitere Kommunikationspfad (19') außerhalb des Betriebssystemkerns (10) verläuft.

3. Verfahren nach einem der Ansprüche 1 oder 2, **dadurch gekennzeichnet, daß** die Netzauswahl in Abhängigkeit von durch die Applikationen vorgegebenen Zieladressen erfolgt.

4. Verfahren nach einem der Ansprüche 1 bis 3, **dadurch gekennzeichnet, daß** auf das Standardnetzwerk LAN zugegriffen wird, wenn eine Kommunikationsverbindung über den Kommunikationspfad (19) oder den weiteren Kommunikationspfad (19') mit dem Hochleistungsnetzwerk SAN nicht möglich ist.

5. Verfahren nach einem der Ansprüche 1 bis 4, **dadurch gekennzeichnet, daß** Protokollaufgaben zur Ausbildung schlanker Kommunikationsprotokolle in die Netzwerkhardware (17) verlagert sind.

## Claims

1. Method for controlling the communication of individual computers in a computer complex, where the individual computers are connected to one another via a standard network LAN and a high-performance network SAN and where each individual computer has a protocol unit (15) in an operating system core (10), which protocol unit is connected to the standard network LAN and is used for executing communication protocols, and a library (14, 18, 22) which is connected upstream of the operating system core (10) and forms a basis for applications (A, B) on a communication interface (23, 24), with a network selection unit (13) making the selection between the standard network LAN and the high-performance network SAN, **characterized in that** the network selection is made downstream of the library's communication interface (23, 24) and immediately after entry into the operating system core (10), and the library is connected to the high-performance network SAN via a communication path (19), and **in that** a further communication path (19') is provided which connects a further library directly to the high-performance network SAN.

2. Method according to Claim 1, **characterized in that** the further communication path (19') runs outside the operating system core (10).

3. Method according to either of Claims 1 and 2, **characterized in that** the network selection is made on the basis of destination addresses prescribed by the applications.

4. Method according to one of Claims 1 to 3, **characterized in that** the standard network LAN is accessed when a communication link to the high-performance network SAN via the communication path (19) or the further communication path (19') is not possible.

5. Method according to one of Claims 1 to 4, **characterized in that** protocol tasks are moved to the network hardware (17) in order to produce lean communication protocols.

## Revendications

1. Procédé pour commander la communication entre des ordinateurs individuels faisant partie d'un réseau informatique, les ordinateurs individuels étant reliés entre eux par le biais d'un réseau standard LAN et d'un réseau à hautes performances SAN et chaque ordinateur individuel présentant dans un noyau de système d'exploitation (10) un module de protocole (15) lié au réseau standard LAN et destiné à traiter des protocoles de communication ainsi qu'une bibliothèque (14, 18, 22) disposée avant le noyau du système d'exploitation (10) et sur laquelle reposent des applications (A, B) au niveau d'une interface de communication (23, 24), la sélection entre le réseau standard LAN et le réseau à hautes performances SAN s'effectuant dans un module de sélection de réseau (13), **caractérisé en ce que** la sélection du réseau s'effectue après l'interface de communication (23, 24) de la bibliothèque et immédiatement avant l'entrée dans le noyau du système d'exploitation (10) et la bibliothèque est reliée avec le réseau à hautes performances SAN par le biais d'un chemin de communication (19) et qu'il est prévu un autre chemin de communication (19') qui relie une autre bibliothèque directement avec le réseau à hautes performances SAN.

2. Procédé selon la revendication 1, **caractérisé en ce que** l'autre chemin de communication (19') s'étend à l'extérieur du noyau du système d'exploitation (10).

3. Procédé selon l'une des revendications 1 ou 2, **caractérisé en ce que** la sélection du réseau s'effectue en fonction des adresses destinataires préalablement indiquées par les applications.

4. Procédé selon l'une des revendications 1 à 3, **caractérisé en ce que** l'accès au réseau standard LAN s'effectue lorsqu'une liaison de communication avec le réseau à hautes performances SAN par le biais du chemin de communication (19) ou de l'autre chemin de communication (19') est impossible.

5. Procédé selon l'une des revendications 1 à 4, **caractérisé en ce que** des tâches de protocole destinées à former des protocoles de communication élancés sont logées dans la partie physique du réseau (17).
